# EUROPEAN PATENT SPECIFICATION

(11) **EP 2 385 749 B1**
(45) Date of publication and mention of the grant of the patent: **20.02.2013**
(21) Application number: 11163186.7
(22) Date of filing: 20.04.2011
(51) Int. Cl.: H05B 33/08

(54) **Light emitting diode module with controllable luminosity**
Lichtemittierendes Diodenmodul mit steuerbarer Helligkeit
Module de diode électroluminescente avec luminosité contrôlable

(30) Priority: 22.04.2010 TW 099112739
(43) Date of publication of application: 09.11.2011
(73) Proprietor: Advanced-Connectek Inc., Taipei 231 (TW)
(72) Inventor: Yu, Chung-Hung, Hsin-Tien, Taipei 231 (TW)
(74) Representative: Beck & Rössig European Patent Attorneys

(56) References cited:
- FR-A1- 2 930 706
- US-A1- 2008 136 335
- US-A1- 2009 251 070
- US-A1- 2010 039 050

## Description

### FIELD OF THE INVENTION

The present invention relates to a light emitting diode module with controllable luminosity comprising the features of the preamble portion of claim 1, and particularly to controlling luminosity with parallel resistors.

### BACKGROUND

In either industrial or general living needs, a general person with no light source in a dark place or at night would use a flashlight to provide sufficient light for activities and work. However, the flashlights are general handheld type for convenient control of the light source for projection, and inconvenience occurs when both hands are required in the activities or work being performed. Inventions generated from the concepts of headlights on the industrial protection helmets are thus provided with the light emitting device on the glasses for convenient light use.

In recent years, lamps using light emitting diodes (LEDs) as the light sources are developed rapidly due to the advantages of high luminosity, power saving, environment-friendly, and long life span. Nowadays LEDs gradually replace traditional light bulbs and are widely used as the light emitting devices in the lamps.

There are two conventional methods to control the luminosity. One is to control the spatial luminosity with the number of light bulbs, and the other is to use a light adjuster to adjust the output voltage and current to control the lightness of the light bulbs. The first method is widely used by most users to control the luminosity with the number of light bulbs. In this way, however, the light bulbs always work under the highest efficiency, and the life span of the lamps would be reduced, thus creating inconvenience for the users. The second method uses the light adjuster to control the lightness by adjusting the output voltage and current, which controls the luminosity and extends the life span of the light bulbs, and is thus welcomed by the users. In this method, however, additional circuits are generally required and cost would be increased.

FR 2,930,706 A1 discloses a light emitting diode module with controllable luminosity comprising the features of the preamble portion of claim 1. More specifically, FR 2,930,706 A1 discloses a portable electric lamp comprising a lighting module with LEDs and user control means connected to an electronic control circuit to define different lighting modes. An optic sensor is housed in the casing near the light-emitting diode LED to transmit to the control circuit a signal representative of the lighting induced by the lamp to automatically regulate the power of the LED according to a predetermined threshold. The power of the lighting module is determined by a pair of resistors R1, R2 connected with the LED to the terminals of power source. The first resistor R1 is connected in series with the LED, and the second resistor R2 is connected in parallel to the terminals of the first resistor R1 by a switch which is controlled by the output of a comparator circuit of Schmitt trigger type with operational amplifier. A control signal S from an optic sensor is applied to an input E2 of a comparator circuit. The other input E1 receives a setpoint value corresponding to the threshold of the comparator circuit. Depending on whether the value of the signal S from the sensor is above or below the threshold of the comparator circuit, a switch is opened or closed so as to modify the value of the resistance in series with diode LED. This results in a variation of the lighting power of the LED, in particular a maximum power and a reduced power.

US2010/039050A1 discloses a method for adjusting brightness of a light source. A light source with X brightness degrees is provided. The light source is turned on and off at least one time. When the number n of times of turning on the light source is less than or equal to the total number X of brightness degrees, the brightness degree of the light source is determined to be the nth brightness degree. When the number n is greater than the total number X, the brightness degree of the light source is determined to be the mth brightness degree, wherein the number m is equal to a remainder obtained by dividing the number n by the number X, is determined; if the number m is equal to zero, the brightness degree of the light source is determined to be the last brightness degree.

In response to the problems of the conventional arts, with research and practical experience, the inventor provides a LED module with controllable luminosity to solve the above-mentioned defects.

### SUMMARY OF THE INVENTION

In view of the problems of the conventional arts, an objective of the present invention is to provide a alternative light emitting diode module with controllable luminosity.

To achieve the foregoing objectives of the invention, the invention provides a light emitting diode module with controllable luminosity according to claim 1. An advantageous embodiment is indicated in a further claim.

As disclosed above, the LED module of the present invention has one or more advantages as follows:
(1) The LED module extends the life span of the LED chip.
(2) The LED module is simply designed and should not increase the cost.

To improve understanding of the invention, the techniques employed by the present invention to achieve the foregoing objectives, characteristics and effects thereof are described hereinafter by way of examples with reference to the accompanying drawings.

### BRIEF DESCRIPTION OF THE DRAWINGS

Fig. 1 is a schematic view of a LED module, which, however, does not form part of the present invention;
Fig. 2 is a second schematic view of a LED module of Fig. 2;
Fig. 3 is a first schematic view of a LED module of a first embodiment of the present invention;
Fig. 4 is a second schematic view of a LED module of the first embodiment of the present invention;
Fig. 5 is a third schematic view of a LED module of the first embodiment of the present invention;
Fig. 6 is a fourth schematic view of a LED module of the first embodiment of the present invention; and
Fig. 7 is a schematic view of a LED module of a second embodiment of the present invention.

### DETAILED DESCRIPTION OF THE INVENTION

The techniques employed by the LED module of the present invention to achieve the foregoing objectives, characteristics and effects thereof are described hereinafter by way of examples with reference to the accompanying drawings. For better understanding, the same elements in different embodiments are referred to and denoted by the same numerals.

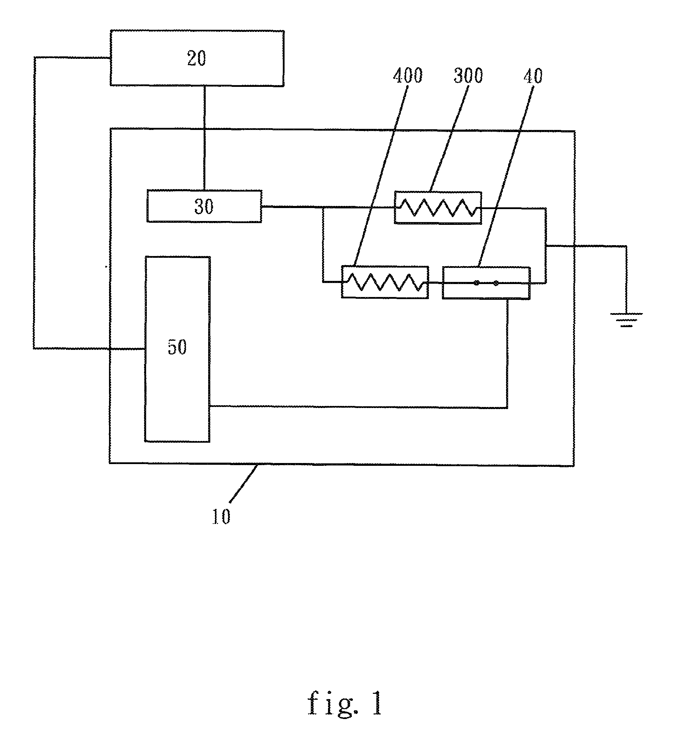

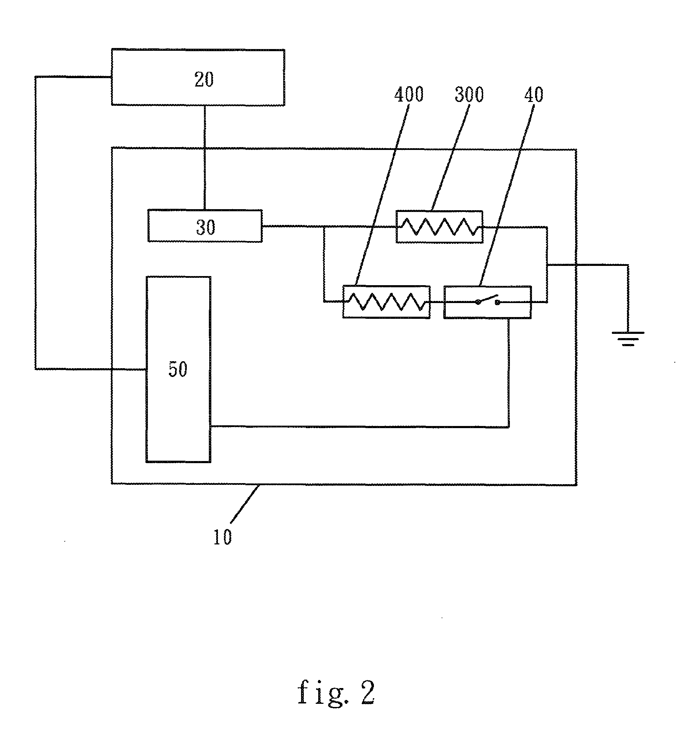

Referring to Fig. 1 and Fig. 2, Fig. 1 is a first schematic view of a LED module, and Fig. 2 is a second schematic view of a LED module of Fig. 1. In the figures, the LED module 10 is supplied electricity by a power source 20, and the LED module 10 comprises a LED chip 30, a protective resistor 300, a first switching unit 40, a first switching resistor 400, and a processor 50.

The LED chip 30 is provided to provide light. The LED chip 30 is electrically connected to the protective resistor 300, and the protective resistor 300 is provided to avoid the LED chip 30 from being burned.

The first switching unit 40 and the first switching resistor 400 are electrically connected in series connection, and the first switching unit 40 and the first switching resistor 400 are in parallel to the protective resistor 300. The first switching unit 40 may be formed in a connection status or an open status to change the total equivalent resistance of the whole LED module 10, thus changing the current or voltage passing through the LED chip 30 and changing the luminosity of the LED chip 30. The first switching unit 40 can be preferably metal oxide semiconductors (MOS).

The processor 50 is electrically connected respectively to the power source 20 and to the first switching unit 40. The processor 50 is provided to receive a switching signal, and sends out instructions to control the first switching unit 40 to be in a connection status or in an open status according to the switching signal, thus changing the total resistance of the LED module 10 and generating a variety of different luminosity with the LED chip 30. The processor 50 can be a microcontroller unit (MCU).

The switching signal can be a pulse voltage generated by switching off and then turning on of the power source 20. The pulse voltage is generally higher than the voltage provided when the power source 20 is in stable operation. Therefore, when the processor 50 receives the high pulse voltage, it sends out a signal to control the status of the first switching unit 40, thus changing the total resistance of the LED chip 30.

When a user activates the power source 20, the LED chip 30 starts to operate. At this time, the processor 50 sets the predetermined status of the first switching unit 40 as the connection status. Under the connection status, the equivalent resistance between the LED chip 30 and the ground terminal is the resistance of the protective resistor 300 in parallel to the first switching resistor 400. Thus, the LED chip 30 is in higher luminosity.

When the user turns the power source 20 off and reactivates the power source within a predetermined time interval, the processor 50 receives the high voltage switching signal to control the first switching unit 40 to switch from the connection status to the open status. At this time, the equivalent resistance is the resistance of the protective resistor 300. Thus, the current passing through the LED chip 30 is reduced, and luminosity is reduced. To have it to return to high luminosity, the user may turn the power source 20 off and reactivate the power source to return the first switching unit 40 back to the connection status, thus reducing the equivalent resistance and returning the LED chip 30 to the high luminosity.

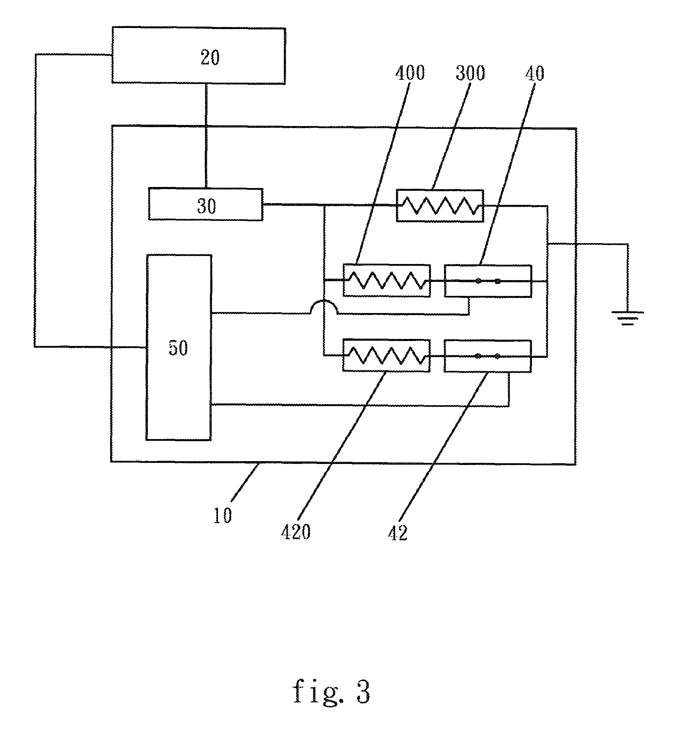

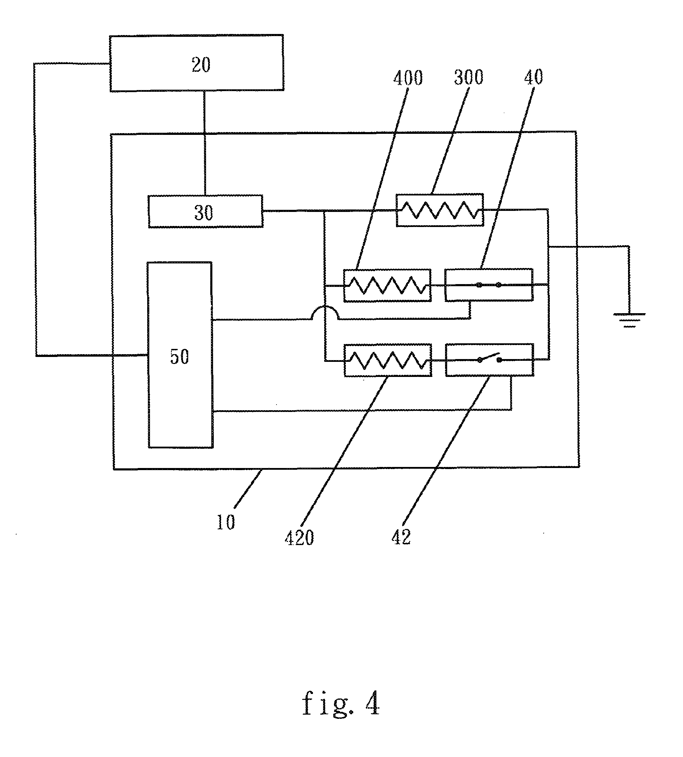

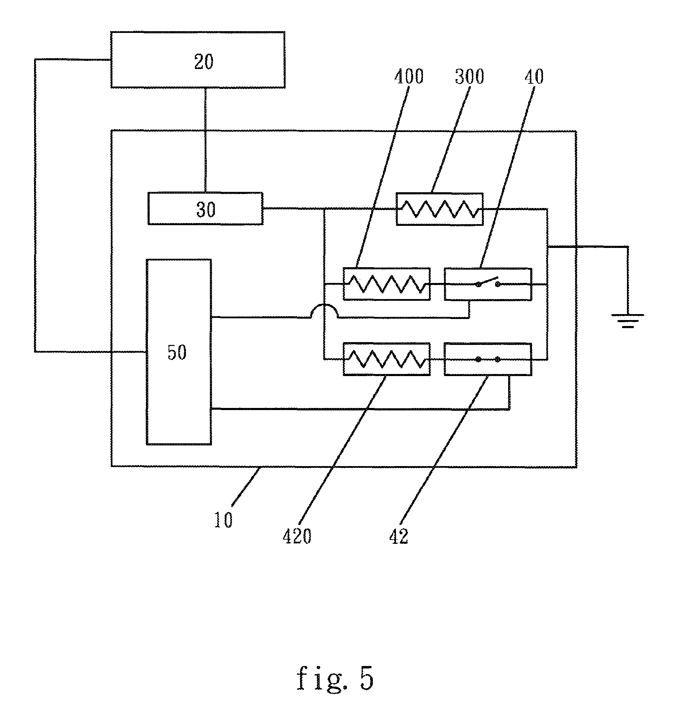

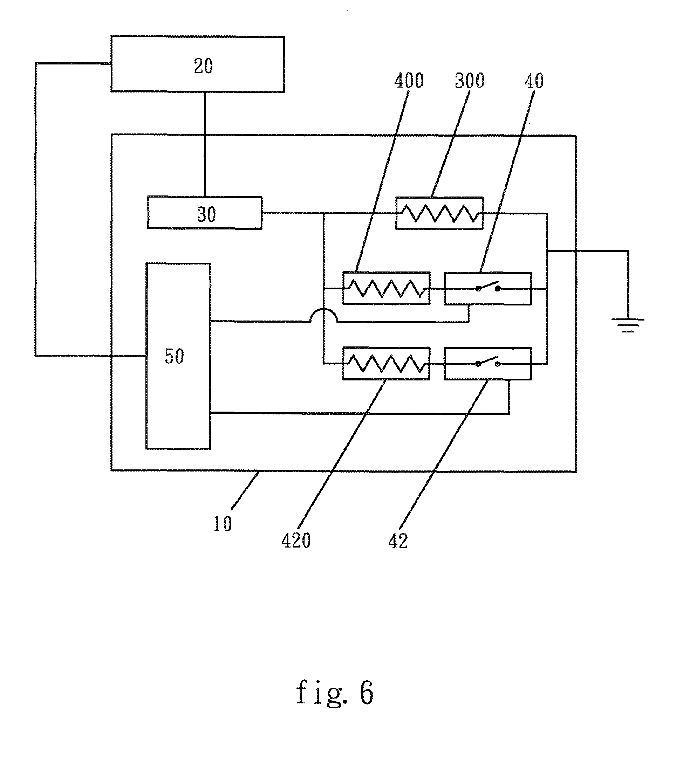

Referring to Fig. 3 to Fig. 6 and Fig. 1, Fig. 3 is a first schematic view of a LED module of the first embodiment of the present invention, Fig. 4 is a second schematic view of a LED module of the first embodiment of the present invention, Fig. 5 is a third schematic view of a LED module of the first embodiment of the present invention, and Fig. 6 is a fourth schematic view of a LED module of the first embodiment of the present invention. In the figures, the LED module 20 is supplied electricity by a power source 20, and the LED module 20 comprises a LED chip 30, a protective resistor 300, a first switching unit 40, a first switching resistor 400, a second switching unit 42, a second switching resistor 420, and a processor 50.

The LED chip 30 is provided to provide light. The LED chip 30 is electrically connected to the protective resistor 300, and the protective resistor 300 is provided to avoid the LED chip 30 from being burned. In this embodiment, the resistance of the protective resistor 300 is 20 Ω.

The first switching unit 40 and the first switching resistor 400 are electrically connected in series connection, and the first switching unit 40 and the first switching resistor 400 are in parallel to the protective resistor 300. The first switching unit 40 may be formed in a connection status or an open status to change the total equivalent resistance of the whole LED module 10, thus changing the current or voltage passing through the LED chip 30 and changing the luminosity of the LED chip 30. The first switching unit 40 can be preferably metal oxide semiconductors (MOS). In this embodiment, the resistance of the first switching resistor 400 is 80 Ω.

The second switching unit 42 and the second switching resistor 420 are electrically connected in series connection, and the second switching unit 42 and the second switching resistor 420 are in parallel to the protective resistor 300 and the first switching resistor 400. The second switching unit 42 may be formed in a connection status or an open status to change the total equivalent resistance of the whole LED module 10, thus changing the current or voltage passing through the LED chip 30 and changing the luminosity of the LED chip 30. The second switching unit 42 can also be preferably metal oxide semiconductors (MOS). In this embodiment, the resistance of the second switching resistor 420 is 40 Ω.

The processor 50 is electrically connected respectively to the power source 20, to the first switching unit 40, and to the second switching unit 42. The processor 50 is provided to receive a switching signal, and sends out instructions to control the first switching unit 40 or the second switching unit 42 to be in a connection status or in an open status according to the switching signal, thus changing the total resistance of the LED module 10 and generating a variety of different luminosity with the LED chip 30. The processor 50 can be a microcontroller unit (MCU).

In this embodiment, the switching signal can be a pulse voltage generated by switching off and then turning on of the power source 20. The pulse voltage is generally higher than the voltage provided when the power source 20 is in stable operation. Therefore, when the processor 50 receives the high pulse voltage, it sends out a signal to control the status of the first switching unit 40 or the second switching unit 42, thus changing the total resistance of the LED chip 30.

When a user activates the power source 20, the LED chip 30 starts to operate. At this time, the processor 50 sets the predetermined status of the first switching unit 40 and the second switching unit 42 as the connection status. Under the connection status, the equivalent resistance between the LED chip 30 and the ground terminal is the resistance of the protective resistor 300 in parallel to the first switching resistor 400 and the second switching resistor 420. Thus, the LED chip 30 has a resistance of 11.5Ω, and is in the highest luminosity.

When the user turns the power source 20 off and reactivates the power source within a predetermined time interval, the processor 50 receives the high voltage switching signal to control the first switching unit 40 to switch from the connection status to the open status. At this time, the equivalent resistance is the equivalent resistance of the protective resistor 300 in parallel to the second switching resistor 420, which is increased to about 13Ω. Thus, the current passing through the LED chip 30 is reduced, and luminosity is reduced.

When the user again turns the power source 20 off and reactivates the power source within the predetermined time interval, the processor 50 again receives the high voltage switching signal to control the first switching unit 40 to switch from the open status to the connection status, and to control the second switching unit 42 to switch from the connection status to the open status. At this time, the equivalent resistance is the equivalent resistance of the protective resistor 300 in parallel to the first switching resistor 400, which is increased to about 16Ω. Thus, the current passing through the LED chip 30 is further reduced, and luminosity is further reduced.

When the user again turns the power source 20 off and reactivates the power source within the predetermined time interval, the processor 50 again receives the high voltage switching signal to control both the first switching unit 40 and the second switching unit 42 to be in the open status. At this time, the current only passes through the protective resistor 300, and the equivalent resistance is thus 20Ω. Thus, the current passing through the LED chip 30 is reduced to the lowest to generate the lowest luminosity.

Finally, to have the light to return to high luminosity, the user may turn the power source 20 off and reactivate the power source to return the first switching unit 40 and the second switching unit 42 back to the connection status, thus reducing the equivalent resistance and returning the LED chip 30 to the highest luminosity in a loop mode.

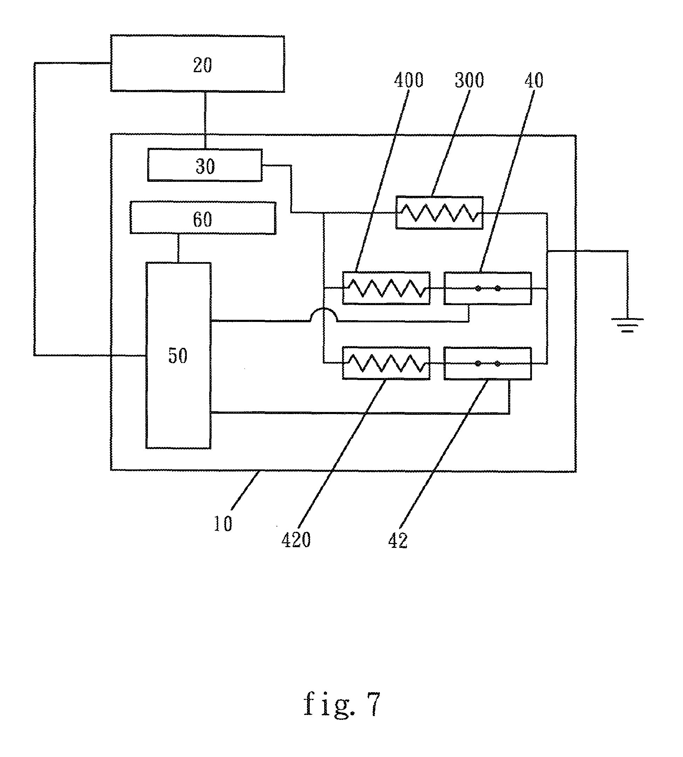

Referring to Fig. 7, which is a schematic view of a LED module of the second embodiment of the present invention. In this embodiment, only features different from the first embodiment would be disclosed, and descriptions of similar features would be eliminated. In the figures, the LED module 20 further comprises a wireless receiver 60, and the wireless receiver 60 is electrically connected directly to the processor 50. When a user wants to change the luminosity of the LED chip 30, the user sends a wireless signal to the wireless receiver 60, and the wireless receiver 60 generates the switching signal and sends to the processor 50. The processor 50 then controls the first switching unit 40 or the second switching unit 42 to be in a connection status or in an open status according to the switching signal, thus changing the total resistance of the LED module 10 and the luminosity with the LED chip 30.

The preferred embodiments of the present invention have been disclosed in the examples to show the applicable value in the related industry. However the examples should not be construed as a limitation on the actual applicable scope of the invention, and as such, all modifications and alterations without departing from the invention and appended claims shall remain within the protected scope and claims of the invention.

## Claims

1. A light emitting diode module (10) with controllable luminosity, comprising:
- a light emitting diode chip (30) which is supplied with electricity by a power source (20) and electrically connected to a protective resistor (300);
- a first switching unit (40) formed by metal oxide semiconductors in series to and electrically connected to a first switching resistor (400), the first switching unit (40) and the first switching resistor (400) being in parallel to the protective resistor (300);
**characterized by**
- a second switching unit (42) formed by metal oxide semiconductors and a second switching resistor (420) connected in series, the second switching unit (42) and the second switching resistor (420) being in parallel to the protective resistor (300); and
- a processor (50) formed by a mirocontroller unit to receive a switching signal of pulse voltage generated by switching of the power source (20), the processor (50) being electrically connected to the first switching unit (40) and the second switching unit (42) to control the first switching unit (40) and the second switching unit (42) to be in a connection status or in an open status according to the switching signal.

2. The light emitting diode module with controllable luminosity as claimed in claim 1, further comprising a wireless receiver (60) electrically connected to the processor (50), the wireless receiver (60) receiving a wireless signal to generate the switching signal for the processor (50).

## Patentansprüche

1. Lichtemittierendes Diodenmodul (10) mit steuerbarer Helligkeit, umfassend:
- einen lichtemittierenden Diodenschaltkreis (30), der von einer Stromquelle (20) mit Strom versorgt wird und elektrisch mit einem Schutzwiderstand (300) verbunden ist;
- eine erste Schalteinheit (40), die von Metalloxid-Halbleitern gebildet wird, welche mit einem ersten Schaltwiderstand (400) in Reihe geschaltet und elektrisch verbunden sind, wobei die erste Schalteinheit (40) und der erste Schaltwiderstand (400) parallel zu dem Schutzwiderstand (300) geschaltet sind;
**gekennzeichnet durch**
- eine zweite Schalteinheit (42), die von Metalloxid-Halbleitern und einem zweiten Schaltwiderstand (420) gebildet wird, welche in Reihe geschaltet sind, wobei die zweite Schalteinheit (42) und der zweite Schaltwiderstand (420) parallel zu dem Schutzwiderstand (300) geschaltet sind; und
- einen Prozessor (50), der von einer Mikrosteuerungseinheit gebildet wird, welche ein Schaltsignal aus gepulster Spannung empfängt, das **durch** Schalten der Stromquelle (20) erzeugt wird, wobei der Prozessor (50) elektrisch mit der ersten Schalteinheit (40) und der zweiten Schalteinheit (42) verbunden ist und die erste Schalteinheit (40) und die zweite Schalteinheit (42) so steuert, dass sie sich entsprechend dem Schaltsignal in einem Verbindungsstatus oder in einem offenen Status befinden.

2. Lichtemittierendes Diodenmodul mit steuerbarer Helligkeit nach Anspruch 1, das ferner einen drahtlosen Empfänger (60) umfasst, der elektrisch mit dem Prozessor (50) verbunden ist, wobei der drahtlose Empfänger (60) ein drahtloses Signal empfängt, um das Schaltsignal für den Prozessor (50) zu erzeugen.

## Revendications

1. Module de diode électroluminescente (10) à luminosité qui peut être commandée comprenant :
- une puce pour diode électroluminescente (30) qui est alimentée en électricité par une source de courant (20) et qui est reliée électriquement à une résistance de protection (300) ;
- une première unité de commutation (40) formée par des semi-conducteurs en oxyde de métal en série avec et reliés électriquement à une première résistance de commutation (400), la première unité de commutation (40) et la première résistance de commutation (400) étant en parallèle avec la résistance de protection (300),
**caractérisé par**
- une seconde unité de commutation (42) formée par des semi-conducteurs en oxyde de métal et une seconde résistance de commutation (420) reliée en série, la seconde unité de commutation (42) et la seconde résistance de commutation (420) étant en parallèle avec la résistance de protection (300) et
- un processeur (50) formé par une unité de microcontrôleur pour recevoir un signal de commutation de tension d'impulsion généré par la commutation de la source de courant (20), le processeur (50) étant relié électriquement à la première unité de commutation (40) et à la seconde unité de commutation (42) pour commander la première unité de commutation (40) et la seconde unité de commutation (42) pour être dans un statut de connexion ou dans un statut ouvert selon le signal de commutation.

2. Module de diode électroluminescente à luminosité qui peut être commandée selon la revendication 1 comprenant de plus un récepteur sans fil (60) relié électriquement au processeur (50), le récepteur sans fil (60) recevant un signal sans fil pour générer le signal de commutation pour le processeur (50).
